# EUROPEAN PATENT SPECIFICATION

(11) **EP 4 302 612 B1**
(45) Date of publication and mention of the grant of the patent: **02.04.2025**
(21) Application number: 23182561.3
(22) Date of filing: 30.06.2023
(51) Int. Cl.: A23L 7/10, A21D 6/00, A23L 7/104, A23L 7/20, C12C 7/01, C12C 7/04, C12C 7/047, C12C 7/20, C12C 7/26, C12C 3/00, C12C 11/00, C12C 12/00, C12F 3/06

(54) **A METHOD OF PRODUCING GLUTEN-FREE BEER AND GLUTEN-FREE SPENT GRAINS**
VERFAHREN ZUR HERSTELLUNG VON GLUTENFREIEM BIER UND GLUTENFREIEN VERBRAUCHTEN KÖRNERN
PROCÉDÉ DE PRODUCTION DE BIÈRE SANS GLUTEN ET DE DRÊCHES SANS GLUTEN

(30) Priority: 04.07.2022 IT 202200014104
(43) Date of publication of application: 10.01.2024
(73) Proprietor: Università degli Studi di Foggia, 71122 Foggia (IT)
(72) Inventor: BAIANO, Antonietta, I-71122 FOGGIA (IT); DE PILLI, Teresa, I-71121 FOGGIA (IT)
(74) Representative: Rimini, Rebecca

(56) References cited:
- US-A1- 2018 044 619
- WATSON H G ET AL: "Applicability of different brewhouse technologies and gluten-minimization treatments for the production of gluten-free (barley) malt beers: Pilot- to industrial-scale", JOURNAL OF FOOD ENGINEERING, ELSEVIER, AMSTERDAM, NL, vol. 245, 19 September 2018 (2018-09-19), pages 33 - 42, XP085533792, ISSN: 0260-8774, DOI: 10.1016/J.JFOODENG.2018.09.015
- WATSON H G ET AL: "Supplementary Information Applicability of different brewhouse technologies and gluten-minimization treatments for the production of gluten-free (barley) malt beers: pilot-to industrial-scale 17 18", 1 March 2019 (2019-03-01), pages 1 - 8, XP093018716, Retrieved from the Internet <URL:https://ars.els-cdn.com/content/image/1-s2.0-S0260877418304035-mmc1.docx> [retrieved on 20230130]
- KOK YEE JIUN ET AL: "Brewing with malted barley or raw barley: what makes the difference in the processes?", APPLIED MICROBIOLOGY AND BIOTECHNOLOGY, SPRINGER BERLIN HEIDELBERG, BERLIN/HEIDELBERG, vol. 103, no. 3, 4 December 2018 (2018-12-04), pages 1059 - 1067, XP036704755, ISSN: 0175-7598, [retrieved on 20181204], DOI: 10.1007/S00253-018-9537-9

## Description

The present invention refers to a method of producing gluten-free beer and gluten-free spent grains from traditional starchy cereals, and to the use of said spent grains in the food sector.

According to Law No. 1354 of 16/08/1962 laying down rules on hygiene in the production and trade of beer, the designation as "beer" is reserved for the product obtained from the alcoholic fermentation with strains of *Saccharomyces carlsbergensis* or *Saccharomyces cerevisiae* of a wort prepared with malt, whether or not roasted, of barley or wheat or mixtures thereof and water, bittered with hops or derivatives thereof, or both. Furthermore, according to the same Law, barley or wheat malt - which is more expensive in that it already contains the set of enzymes necessary for saccharification, i.e., the transformation of starch into fermentable sugars - can be replaced with other cereals, whether or not broken or ground or in the form of flakes, as well as with starchy and sugary raw materials which generally are less expensive than malt. In addition to economic reasons, the replacement of malt with unmalted cereals and other substitutes meets the need to diversify the "beer" product by imparting organoleptic characteristics different from those of conventional beers.

Cereals such as wheat, rye, barley, oats, spelt, kamut or hybridised strains thereof and derivative products are known to contain proteins called gliadins which, together with glutenins, form the viscoelastic complex known as gluten. By way of example, Table 1 below shows the protein and gluten protein contents of some cereals (Belitz HD, et al; (2009) "Cereals and cereal products", Food Chemistry, Springer, Berlin, pp. 670-675; Souci SW, et al; (2008) Food composition and nutrition tables, in: Deutsche Forschungsanstalt für Lebensmittelchemie (Ed.), Deutsche Forschungsanstalt für Lebensmittelchemie, Med. Pharm. Scientific Publishers, Stuttgart; Wieser H, et al; (1983), Tryptophangehalt von Getreideproteinen, Z. Lebensm. Unters. Forsch. 177, p. 457-460:

**Table 1**

| Cereals | Total protein (g/100g) | Glutenins+Gliadins (% of total protein) |
|---|---|---|
| Wheat | 11.3 | 31.3 |
| Rye | 9.4 | 23.6 |
| Barley | 11.1 | 24.8 |
| Oats | 10.8 | 19.5 |

Celiac disease is an autoimmune disease that affects genetically predisposed individuals when they consume gluten-containing foods and for which gliadin is responsible. In predisposed individuals, the intake of gluten-containing foods may lead to intestinal symptoms (diarrhoea, abdominal pain and distension, vomiting, flatulence) or extra-intestinal symptoms (anaemia, rickets, osteoporosis, lack of concentration, development of other autoimmune diseases, vitamin and mineral deficiencies with all the resulting diseases). The autoimmune basis of the disease, when combined with the introduction of even minimal amounts of gluten, leads to inflammatory processes which cause atrophy, in the most serious cases permanent atrophy, of the intestinal villi, making it difficult to absorb nutrients.

There are currently no treatments for celiac disease and those who suffer from it must necessarily completely exclude gluten from their diet. Celiacs must therefore use foods in their diet that are specifically produced, prepared and/or processed a) to reduce the gluten content in one or more gluten-containing ingredients, b) to replace gluten-containing ingredients with other ingredients that are naturally gluten-free. Generally, since the removal of gluten from cereals containing it exhibits significant technical difficulties and economic constraints, the second option is preferred.

Beers produced from traditional raw materials therefore have gluten contents generally exceeding 20 mg/kg by weight, a value chosen on a preventive basis as a safety threshold in order to prevent adverse effects caused by high gluten ingestion and laid down in Community legislation for the labelling of gluten-free products. In fact, according to Commission Implementing Regulation (EU) No. 828/2014, the term 'gluten-free' is only allowed where the gluten content in the food sold to the final consumer does not exceed 20 mg/kg by weight.

In addition, it should be noted that the gluten content in craft beers may be higher than that of industrial beers (Fanari M. et al, "A preliminary study about gluten levels in Sardinian craft beers", J. Microbiol. Biotechnol. Food Sci. (2017), 6, 1195-1198), since the Italian legislation establishes that craft beer, during production, is not subjected to microfiltration steps (Law No. 1354, art. 2, paragraph 4a of 16/08/1962) which, in addition to clarifying the beer, allow the removal of a large part of the protein component.

Several gluten-free "beers" are available on the market, which are produced by replacing barley or wheat malt (and other cereals, whether or not malted, containing gluten protein) with substitute starchy sources such as gluten-free cereals (rice, maize, millet), pseudocereals (quinoa, buckwheat) or other ingredients capable of providing fermentable sugars, such as chestnuts or pumpkin. However, according to the aforementioned Italian legislation on beer production, barley and/or wheat cannot be replaced for more than 40% of the dry wort extract with other cereals or starchy and sugary substances, and therefore if only gluten-free raw materials are used as the raw material, the final product cannot be defined as "beer", but as "alcoholic beverage based on". Furthermore, these gluten-free "beers" have organoleptic characteristics that are significantly different from those of beers produced with conventional ingredients (Cela N, et al; "Gluten-Free Brewing: Issues and Perspectives", (2020) Fermentation, 6, 53.doi:10.3390/fermentation6020053) - changes often unwelcome by regular consumers - and also increased susceptibility to drop in quality. By way of example, rice beer generally has low alcohol content, poor froth stability, lack of body (ELM and Brenna OV strains; "Brewing with rice malt-a gluten-free alternative", (2010) J. Inst. Brew., 116, 275-279, doi:10.1002/j.2050-0416.2010.tb00431.x) and, due to the higher lipid content in rice compared to barley, greater susceptibility to oxidation of free unsaturated fatty acids and to the development of rancid notes (Kongkaew A, et al; "Optimization of wort production from rice malt using enzymes and barley malt", (2012) Afr. J. Biotechnol., 11, 9941-9949, doi:10.5897/ajb11.23032012).

WATSON H G ET AL: "Applicability of different brewhouse technologies and gluten-minimization treatments for the production of gluten-free (barley) malt beers: Pilot- to industrial-scale discloses a process of producing a gluten-free beer with a mixture of a plurality of gluten-containing cereal grains with water.

US2018/044619 discloses a method to produce a beer with an increased level of free amino acid content comprising adding grists from malted gluten containing cereals together with adjuncts of non-malted cereals and comprising the step of boiling the hops with the wort for 40 min.

KOK YEE JIUN ET AL: "Brewing with malted barley or raw barley: what makes the difference in the processes?" discloses a step of adding a heating step when using unmalted barley.

If beer is not a staple food, it should be noted that most of the gluten introduced in the diet is that contained in cereal derivatives such as pasta and baked goods. In this case, too, wheat flours are replaced by rice flour, white and yellow maize, pulses (beans, lentils, lupines, soya beans), buckwheat and, again, the use of gluten-free raw materials leads to substantial organoleptic changes as well as technological problems due to the need to compensate for the absence of gluten. In fact, the gluten lattice, which is formed only following the hydration of the semolina/flour and the kneading of the dough, traps the starch granules, thus conferring resistance to the pasta when it is cooked and preventing excessive leaching of the amylose into the cooking water, and at the same time retains the carbon dioxide bubbles that develop during bread leavening, thus allowing the formation of an alveolate and compact texture (the crumb). Gluten properties are linked to the ability of glutenins to confer elasticity and toughness and to the ability of gliadins to confer extensibility and viscosity to the dough. In the absence of gluten, the structuring function of gluten is partially replaced by modifying the formulations by adding thickeners, emulsifiers, or pre-gelatinised starches.

Spent grains represent the most abundant by-product of the brewing industry (85% of the total) and it has been calculated that the brewing industry annually produces about 3.4 million tons of them in the European Union alone. Spent grains consist of the husk (glumella), which initially covers the barley grain, the pericarp, and the seed coverings, which remain after the mashing step.

Disposal of the spent grains is very expensive. Currently, spent grains can be partially used in animal feed, in particular in an amount not exceeding 20% of the dairy cows' daily ration, because their high content of moisture (about 50-55%) and nutrients on the one hand makes them susceptible to microbial growth and, on the other, makes their storage and transport uneconomical.

However, the analysis of the composition of spent grains has opened up interesting prospects for the use of this by-product as food. Their complete composition, on a dry matter basis, is as follows: dietary fibre 28-45%, of which 25-40% insoluble and 3-4% soluble; protein 15-25%; sugars 13-23%; lipids 9-13%; ash 2-4% (the most represented minerals include phosphorus, calcium, magnesium, and sodium, representing 6, 3.6, 1.9 and 0.1 g/kg, respectively); tocopherols, tocotrienols, and B vitamins; phenolic compounds, mainly ferulic acid (3.3 g/kg dry matter) and p-coumaric acid (0.6 g/kg dry matter) (Ikram S., et al; "Composition and Nutrient Value Proposition of Brewers Spent Grain"; (2017) J Food Sci 82(10), 2232-2242).

Due to their high nutritional value and the ability to turn them into flour, spent grains represent a raw material suitable for use in food formulations that include a kneading step in the production process (pasta, bread, snacks, biscuits, and other baked goods). However, their gluten content is higher than that laid down in Community legislation for products labelled as gluten-free, preventing their use in food production for celiacs.

Therefore, one object of the present invention is to provide a method which allows gluten-free beer to be produced on a large scale, with a limited number of operating steps, starting from gluten-containing cereals, while retaining the main organoleptic characteristics of conventional beers.

Another object of the invention is to provide a method capable of obtaining gluten-free spent grains, while preserving their high nutritional value, which are suitable for use in human food production, in particular of flours and derivatives thereof.

In consideration of these objects, a method of producing gluten-free beer, a method of producing gluten-free spent grains, and a method of producing gluten-free flour form the object of the invention, as defined in the attached independent claims.

Further features and advantages of the invention are identified in the attached dependent claims and illustrated in detail in the following description.

The attached independent and dependent claims form an integral part of the present specification.

As will be apparent from the following detailed description, the present invention provides a method of producing gluten-free beer which is defined by a combination of operating conditions which, while starting from raw materials with a high gluten content, surprisingly allow a controlled degradation of the beer protein fraction, more specifically of the gluten protein complex, without however affecting the qualitative properties of this beverage, in particular the formation and consistency of the froth.

Advantageously, therefore, the method which forms the object of the invention allows a gluten-free beer or a beer with an extremely low gluten content to be obtained, without the need for detoxification procedures which require the use of exogenous enzymes or preliminary grain treatments.

Therefore, one object of the present invention is a method of producing gluten-free beer, wherein the method employs a mixture of a plurality of gluten-containing cereal grains as the starting material and comprises the steps of:
(i) contacting the mixture of a plurality of gluten-containing cereal grains with water at a temperature comprised between 35°C and 45°C, the grains being optionally in ground form;
(ii) heating the aqueous mixture of step (i) at a rate of about 1°C per minute until a temperature of 52°C is reached and keeping the aqueous mixture at said temperature for between 10 and 30 minutes;
(iii) further heating the aqueous mixture of step (ii) to a temperature comprised between 60°C and 75°C and keeping the aqueous mixture at said temperature for between 20 and 75 minutes, thereby obtaining a wort;
(iv) filtering the wort of step (iii) to separate the liquid fraction from the spent grains, thereby obtaining a clear wort;
(v) boiling the clear wort of step (iv) with hops at a temperature of 100°C for between 50 and 100 minutes, thereby obtaining a hop-treated wort;
(vi) fermenting the hop-treated wort of step (v) with one or more yeasts belonging to the *Saccharomyces* genus at a temperature comprised between 20°C and 25°C, to obtain a gluten-free beer,
characterised in that the mixture of a plurality of gluten-containing cereal grains employed as the starting material comprises barley malt in an amount of between 60% and 65% by weight and one or more unmalted cereals in a total amount of between 35% and 40% by weight.

The term "gluten-free beer", as used herein, refers to a beer beverage containing gluten in a total amount of less than 5 milligrams of gluten per kilogram of beer (< 5 mg/kg).

The term "spent grains", as used herein, refers to the solid residue of the wort consisting of the outer shells of the malted cereal grains and other parts that have not undergone solubilisation in the mashing process.

The term "gluten-free spent grains", as used herein, refers to spent grains containing gluten in a total amount of less than 5 milligrams of gluten per kilogram of spent grains (< 5 mg/kg).

Within the scope of the present description, the term "barley malt" refers to the product obtained by subjecting the barley kernel (grain) to the malting process, i.e., the induction of kernel germination followed by drying. As is well known in the art, malting enables starch reserves in the barley kernel to be transformed into simple fermentable sugars.

The term "unmalted cereals", as used herein, refers to cereal grains which have not undergone the malting process.

The method which forms the object of the invention is based on a sequence of successive steps carried out at predetermined temperatures and for specified periods of time, wherein steps (i) to (iv), also known as the mashing, are responsible for the production of a wort containing fermentable sugars, step (v) concerns the boiling of the wort and its aromatization and bittering with hops, and step (vi) provides for the alcoholic fermentation of the aforementioned hop-treated wort.

According to the invention, the starting material employed in the method consists of a mixture of a plurality of gluten-containing cereal grains, which comprises barley malt in an amount of between 60% and 65% by weight, e.g., 61%, 62%, 63%, or 64% by weight, and one or more unmalted cereals in a total amount of between 35% and 40% by weight, e.g., 36%, 37%, 38%, or 39% by weight.

In a preferred embodiment, the mixture employed as the starting material in the method of the invention consists of barley malt in an amount of between 60% and 65% by weight, e.g., 61%, 62%, 63%, or 64% by weight, and one or more unmalted cereals in a total amount of between 35% and 40% by weight, e.g., 36%, 37%, 38%, or 39% by weight.

Preferably, the one or more unmalted cereals in the mixture according to the invention are selected from the group consisting of soft wheat, durum wheat, spelt, and any combination thereof.

Optionally, the plurality of cereal grains in the mixture according to the invention are wholly or partly in the form of ground grains. In this form, the contact surface between the starchy raw material and the water is increased, thereby advantageously increasing the efficiency of the sugar extraction process and the solubilisation of the sugars during the production of the wort (mashing).

The grinding of the plurality of cereal grains in the mixture is preferably coarse so that, at the end of the mashing, the residual solid fraction (spent grains) deposits on the bottom of the mashing tun and acts as a filtering element for the sugary wort. In fact, too much grinding has the disadvantage of forming particles that remain suspended in the sugary wort.

The selection of the most suitable cereal grain grinding techniques for use within the scope of the present invention falls well within the skills of those of ordinary skill in the art.

Preferably, in step (i) the water temperature is between 38°C and 45°C, e.g., 39°C, 40°C, 41°C, 42°C, 43°C, or 44°C.

According to the invention, a water temperature in the above range favours the extraction and subsequent solubilisation of the substances contained in the plurality of cereal grains employed as the starting material, including the various enzymes occurring in barley malt.

Preferably, in step (ii) the aqueous mixture is kept at a temperature of 52°C for between 10 and 30 minutes, e.g., 11, 12, 13, 14, 15, 16, 17, 18, 19, 20, 21, 22, 23, 24, 25, 26, 27, 28, or 29 minutes.

Step (ii), also called "protein rest", and subsequent step (iii) of the method of the invention, respectively, enable the activation of protease and amylolytic enzymes contained in barley malt and the consequent degradation of protein and starch molecules occurring in the cereal grains of the starting material.

Advantageously, the present inventors have found that, due to the particular combination of the operating temperature and time parameters which characterize the mashing step of the method according to the invention, a partial protein degradation occurs in the aqueous mixture resulting in the elimination or in an extremely significant reduction of the gluten protein complex, without at the same time impairing the formation of froth in the final product and/or changing the consistency and persistence thereof. As is well known in the art, froth is indeed a fundamental characteristic of beer, as it can retain scents, delay oxidation, and reduce carbon dioxide evaporation when the beverage is poured.

In one embodiment, step (iii) of the method according to the invention comprises:
(a) a first step of heating the aqueous mixture to a temperature comprised between 60°C and 65°C and keeping the aqueous mixture at said temperature for between 30 and 45 minutes, and
(b) a second step of further heating the aqueous mixture of step (a) to a temperature comprised between 70°C and 75°C and keeping the aqueous mixture at said temperature for between 20 and 45 minutes.

In the above embodiment, step (a) activates the beta-amylase enzyme, which acts by hydrolyzing the starch chains starting from the ends of these molecules, resulting in the production of maltose and dextrins, whereas in step (b) the alpha-amylase enzyme, on the other hand, catalyzes the cleavage of glucosidic bonds in the starch molecule at random points along the chain.

In another embodiment, the method according to the invention further comprises, after step (iii) and before step (iv), a step of further heating the wort to a temperature comprised between 75°C and 80°C and keeping it at said temperature for at least 10 minutes, preferably 10 - 15 minutes. A temperature of 77°C or 78°C is particularly preferred.

The high temperature of the above-mentioned step advantageously leads to the degradation of the enzyme molecules contained in the wort, thereby blocking and inhibiting the enzymatic reactions mediated by the same.

Preferably, step (iv) of filtering the wort is carried out by recovering the wort after the passage through the spent grains deposited on a sieve lying on a perforated stainless-steel support.

Preferably, step (v) of boiling the clear wort together with hops at a temperature of 100°C takes place for between 55 and 95 minutes, more preferably between 60 and 90 minutes.

There are several advantages brought about by step (v) of boiling with hops, the so-called hopping, including denaturation of the protein substances contained in the wort, including enzyme molecules, also due to the formation of tannin-protein complexes, resulting in the precipitation of these substances and clarification of the wort; sterilization of the wort and its concentration by evaporation; increased reducing power of the wort mediated by the production of melanoidins and its flavouring.

According to one embodiment of the method of the invention, at the end of the boiling step, the wort is cooled to a temperature comprised between 20°C and 25°C and subjected to a method for removing the impurities due to hop residues and coagulated proteins.

Methods suitable for use in the aforementioned purification step are known and described in the state of the art, therefore the selection and use thereof are well within the skills of those of ordinary skill in the art. As a non-limiting example, the whirlpool procedure is mentioned, i.e., a method of circular movement of the wort that favours the decanting of the solid parts in a single central area of the tun where the wort is temporarily placed.

Preferably, the one or more yeasts belonging to the *Saccharomyces* genus employed in the fermentation step (vi) are selected from either *Saccharomyces cerevisiae* or *Saccharomyces carlsbergensis.*

In one embodiment, the method according to the invention comprises subjecting the gluten-free beer obtained in step (vi) to further fermentation, after bottling.

Preferably, the further fermentation step in the bottle comprises the steps of adding sucrose sugar to the gluten-free beer, more preferably in a concentration by weight comprised between 0.5% and 1% w/v based on the total volume of the beer, and inoculating in said beer the *Saccharomyces cerevisiae* yeast at a dose preferably comprised between 10⁵ and 10⁶ colony-forming units per millilitre of beer (cfu/ml).

This so-called "re-fermentation" step in the bottle, by favouring the trapping in the bottle, until uncorking, of the carbon dioxide developed, advantageously allows the beverage stability to be enhanced and the degree of effervescence and the amount of froth to be increased.

The preferred embodiments of the method according to the invention described above can be combined with each other as required, and the implementation of these combinations falls within the skills of the person skilled in the art.

A method of producing gluten-free spent grains, comprising the sequence of steps (i) to (iv) as defined above in relation to the method of producing gluten-free beer and using the same starting material as the aforementioned method, also falls within the scope of the invention.

It is understood that the embodiments described above in relation to the method of producing gluten-free beer also apply to the method of producing gluten-free spent grains according to the invention.

As will be explained in more detail in the following experimental section, surprisingly, the method of the present invention makes it possible to obtain spent grains characterized by an extremely low gluten content, in a total amount of less than 5 mg/kg by weight, but with a particularly high content of antioxidants, especially phenolic compounds, which makes them particularly suitable to be used for food consumption by people suffering from celiac disease.

Therefore, the use of gluten-free spent grains obtainable with the method which forms the object of the invention, for the production of human food products, is also described.

Preferred human food products are selected from the group consisting of flour, bread, pasta, piade, piadine, pinse, pizza, frise, friselle, croutons, taralli, scaldatelli, biscuits, sweet cakes, savoury cakes, and any combination thereof.

A further object of the invention is a method of producing gluten-free flour, comprising the step of carrying out the method as previously defined to obtain gluten-free spent grains, and the subsequent steps of drying the gluten-free spent grains thus obtained and grinding the dried gluten-free spent grains.

Preferably, the drying step is carried out at room temperature, even more preferably by forced ventilation, for example up to a moisture content of less than 5%.

Preferably, the grinding of the dried spent grains is carried out by using a knife mill, with heat dissipation.

The examples that follow are provided for illustration purposes and do not limit the scope of the invention as defined in the appended claims.

### Examples

### Example 1: Production of gluten-free beer

Some operating examples of the method of producing gluten-free beer and of the method of producing gluten-free spent grains forming the object of the present invention are given below.

The barley malt normally used in brewing has a total protein content ranging from 9% to 11.5% by weight.

In order to perform the method according to the invention under extreme conditions in terms of gluten content, mixtures of a plurality of cereal grains having the following composition were sent for brewing:
a) mixtures of barley malt (protein content 9.7% by weight) and spelt (protein content 9.2% by weight), thus added in the amount of 40%;
b) mixtures of barley malt (protein content 9.7% by weight) and unmalted soft wheat (protein content 13.2% by weight), thus added in the amount of 40%;
c) mixtures of barley malt (protein content 9.7% by weight) and unmalted durum wheat (protein content 13.7% by weight), thus added in the amount of 40%.

The above described mixtures of barley malt and unmalted cereals were coarsely ground and then mashed under the following conditions:
- flour mixture/water ratio 1:5 (cereal mixtures b) and c)), flour mixture/water ratio 1:4 (cereal mixtures a) and b));
- addition of the flour to the water at a temperature of 45°C for cereal mixtures a) and b) or at a temperature of 38°C for cereal mixtures b) and c);
- increase in the temperature at a rate of 1°C/minute until a temperature of 52°C is reached and the keeping of the aqueous mixture at said temperature for 10 minutes in the case of aqueous mixtures obtained from cereal mixtures a) and b), or for 30 minutes in the case of aqueous mixtures obtained from cereal mixtures b) and c);
- beta-amylase rest at a temperature comprised between 63°C and 65°C for 45 minutes;
- alpha-amylase rest at 70°C for 45 minutes;
- mash out: rest at 78°C for 15 minutes.

Subsequently, the sparging of the spent grains was carried out by using water at a temperature of 78°C. Within the scope of the present description, the term "sparging of the spent grains" refers to the washing of the spent grains after filtration and the collection of the resulting solution in order to maximize sugar recovery. The temperature is established so as to avoid the extraction of tannins, which would give an unpleasant bitter taste, different from that given by hops.

The wort was then boiled at a temperature of 100°C for 90 minutes for worts obtained from the cereal mixtures b) and c) or at a temperature of 100°C for 65 minutes for worts obtained from the cereal mixtures a) and b).

The final wort density was in the range of 1.042 to 1.044 for worts obtained from the cereal mixtures b) and c), whereas the wort density value was 1.053 for worts obtained from the cereal mixtures a) and b).

During the boiling of the wort, the following were added:
- hops to obtain beers with an *International Bitterness Units* (IBU) value of around 13-15 in the case of beers obtained from the cereal mixtures b) and c) and around 20 IBU in the case of beers obtained from the cereal mixtures a) and b);
- typical ingredients for the production of blanche beers.

After whirlpooling and cooling, the worts were inoculated with commercial strains of *Saccharomyces cerevisiae* (approximately 10⁷ cfu/ml) and fermented as follows: an initial tumultuous fermentation at 22°C, followed by racking and slow fermentation at 18-20°C until constant density values of around 1.010 were reached. Subsequently, the beers were bottled and subjected to a third fermenting step (re-fermentation in the bottle):
- with the addition of sucrose (6g/l) for beers obtained from the cereal mixtures a) and b);
- with the addition of sucrose (8 g/l) and commercial strains of *Saccharomyces cerevisiae* yeast (approximately 10⁶ cfu/ml) for beers obtained from the cereal mixtures b) and c).

The beers thus produced have not undergone filtration and pasteurization treatments.

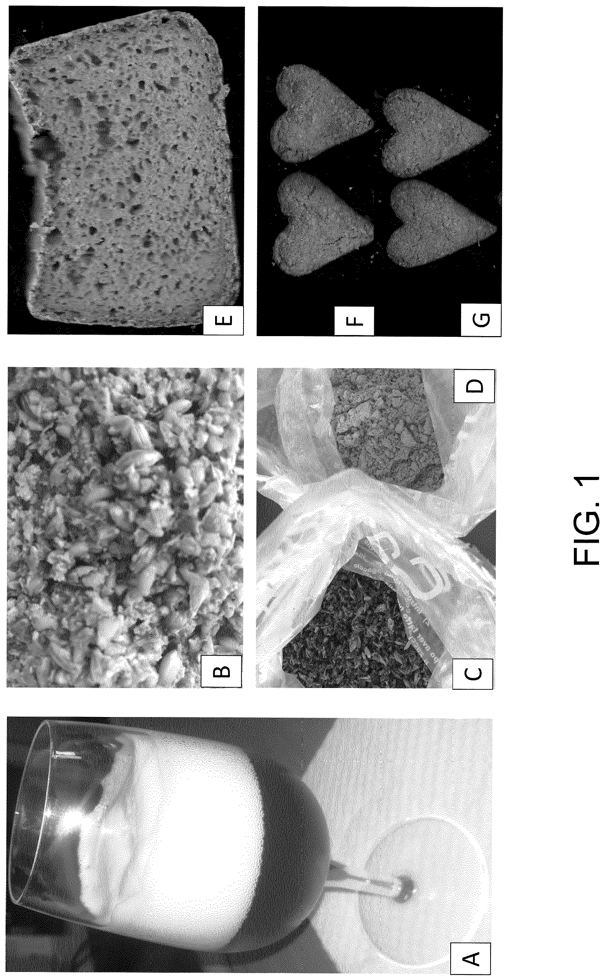

Figure 1A shows a picture of a beer obtained with the method according to the invention using the following combination of conditions:
   - step (i): addition of the flour mixture to the water at a temperature of 45°C;
   - step (ii): temperature increase up to 52°C at a rate of approximately 1°C per minute, and the keeping of the aqueous mixture at this temperature for 10 minutes;
   - after the fermentation step (vi): re-fermentation in the bottle with the addition of sucrose (8 g/l) and commercial strains of *Saccharomyces cerevisiae* yeast (approximately 10⁶ cfu/ml).

It is clear from Figure 1A that the gluten-free beer produced with the method of the invention has a satisfactory amount of froth (positive evaluation element).

### Example 2: Production of gluten-free spent grains and their use

The method of the invention as described in the preceding paragraph up to the sparging of the spent grains was followed for the production of gluten-free spent grains.

The gluten-free spent grains thus recovered, shown in Figure 1B, which had a moisture content of approximately 50%, were dried under forced ventilation at 20-25°C until moisture values of less than 5% were reached.

The dried gluten-free spent grains, as shown in Figure 1C, were ground by using a knife mill, resulting in the production of flours (Figure 1D) having the particle size distribution shown in Table 2 below:

**Table 2**

| Fraction | % |
|---|---|
| > 500 µm | 3-12 |
| Between 500 and 250 µm | 42-45 |
| Between 250 and 125 µm | 37-38 |
| Between 125 and 63 µm | 7-12 |
| < 63 µm | < 1 |

The gluten-free spent grain flours obtained with the method of the invention were used to produce bread by replacing 20% of commercial gluten-free flour with these flours and applying a 50% hydration level.

Figure 1E shows the section of a piece of bread made from 20% gluten-free spent grain flour resulting from the method of the invention employing a mixture of barley malt and soft wheat as the starting material.

For the preparation of biscuits, the present inventors replaced 40% ("biscuits 40%") and 50% ("biscuits 50%") of commercial gluten-free flour with the gluten-free spent grain flours produced with the method of the invention and added other ingredients such as eggs, olive oil, chemical yeast, and flavourings. The biscuits were baked in the oven at 180°C for 20-30 minutes depending on the thickness. Figures 1F and 1G, respectively, show biscuits produced by replacing commercial gluten-free flour with 40% and 50% gluten-free spent grain flour resulting from the method according to the invention employing a mixture of barley malt and soft wheat as the starting material. The biscuits in Figures 1F and 1G have a thickness of about 1 cm and were baked at 180°C for 28 minutes.

Tables 3 to 6 below show the physicochemical characteristics and gluten content of gluten-free beers and gluten-free spent grains, respectively, produced with the method according to the invention, as well as, by way of example, the physicochemical characteristics and gluten content of bread and biscuits produced with the flours from said gluten-free spent grains. The data are shown as mean ± standard deviation.

The data show gluten contents below the detection threshold of the method applied for beers and in any case far below the threshold value of 20 mg/kg by weight for spent grains and related products. It should be noted that the gluten-free beers, spent grains, bread, and biscuits produced with the methods forming the object of the invention also have high contents of antioxidants (phenolic compounds).

Tables 7 to 9 show the extremely positive sensory evaluations for the gluten-free beers obtained with the method of the invention but also for baked goods made with the gluten-free spent grain flours according to the invention.

In the following description, the term "Beers*" refers to gluten-free beers produced with the method of the invention by applying the following conditions: addition of the flour mixture to the water at a temperature of 38°C; protein rest: 52°C for 30 minutes; re-fermentation in the bottle with the addition of sucrose (6g/l).

By contrast, the term "Beers**" refers to gluten-free beers produced with the method of the invention under the following conditions: addition of the flour mixture to the water at a temperature of 45°C; protein rest: 52°C for 10 minutes; re-fermentation in the bottle with the addition of sucrose (8 g/l) and commercial strains of *Saccharomyces cerevisiae* yeast (approximately 10⁶ cfu/ml).

Table 3 shows the physicochemical characteristics, gluten content, and total phenolic content of the beers produced with the method of the invention.

**Table 3**

| **Beer samples** | **Gluten content (ppm)** | **Colour EBC** | **Colour SRM** | **Sugars (°Brix)** | **Dry Residue %** | **pH** | **CO2 (g/l)** | **Alc. %** | **Total phenolic content (mg/L)** | **Antioxidant activity (mmol Trolox eq./L)** |
|---|---|---|---|---|---|---|---|---|---|---|
| Beers* | <5 | 3.05±0 | 1.54±0 | 5.7±0.5 | 5.4±0.1 | 3.8± 0.5 | 5.80± 0.05 | 3.5± 0.2 | 533±92 | 2.25±0.04 |
| Beers** | <5 | 7.32±0.1 | 3.72±0 | 4.8±0.1 | 3.9±0.3 | 4.2±0.1 | 5.1± 0.18 | 4.5± 0.2 | 772±37 | 1.65±0.64 |

Table 4 shows the moisture content, gluten content, and total phenolic content of the gluten-free spent grains obtained with the method of the invention.

**Table 4**

| **Spent grain samples** | **Gluten content (ppm)** | **Moisture %** | **Total phenolic content (mg/g dry matter)** | **Antioxidant activity (mmol Trolox eq./g dry matter)** |
|---|---|---|---|---|
| Spent grains mixture a) | 7.10 | 3.97±0.16 | 4±0 | 7.0±0.9 |
| Spent grains mixture b) | < 5 | 4.55±0.16 | 5±0 | 7.8±1.2 |
| Spent grains mixture c) | < 11.5 | 3.47±0.13 | 4±0 | 2.8±0.1 |

Table 5 shows the physicochemical characteristics, gluten content and total phenolic content of bread produced by replacing 20% of commercial gluten-free flour with the gluten-free spent grain flours obtained with the method of the invention.

**Table 5**

| **Bread samples** | **Gluten content (ppm)** | **Crust moisture %** | **Crumb moisture %** | **Total phenols (mg/g dry matter)** | **Antioxidant activity (mmol Trolox eq./g dry matter)** | **Porosity %** | **Specific volume (cm³/g)** | **Crust colour** | | | **Crumb colour** | | |
|---|---|---|---|---|---|---|---|---|---|---|---|---|---|
| | | | | | | | | **L** | **a** | **b** | **L** | **a** | **b** |
| Bread | <5 | 21.20± 0.09 | 37.15± 0.78 | 4±1 crust 3.8±1.5 crumb | 4.4±0.8 (crust) | 30 | 1.70 | 66.1± 2.7 | 8.7± 0.7 | 27.9± 1.6 | 47.8± 4.1 | 7±0 | 29.9± 1.5 |
| | | | | | 16.4±2.9 (crumb) | | | | | | | | |

The letters "L", "a", "b", respectively, denote the colour coordinates according to the international standard CIE Lab: "L" is the lightness expressed as a percentage (%) (100% is white, 0% is black); "a" and "b" are two colour ranges from red (positive values) to green (negative values) and from yellow (positive values) to blue (negative values), respectively.

Table 6 shows the physicochemical characteristics, gluten content, and total phenolic content of biscuits produced by replacing 40% (biscuits 40%) and 50% (biscuits 50%) of commercial gluten-free flour with the gluten-free spent grain flours obtained with the method of the invention.

**Table 6**

| **Biscuit samples** | **Gluten content (ppm)** | **Moisture %** | **Colorimetric analyses** | | | **Total phenols (mg/g dry matter)** | **Antioxidant activity (mmol Trolox eq./g dry matter)** |
|---|---|---|---|---|---|---|---|
| | | | **L** | **a** | **b** | | |
| Biscuits 40% | < 5 | 4.27±0.17 | 43.7±2.8 | 12.8±1.1 | 33.4±1.17 | 6±0 | 11.0±1.0 |
| Biscuits 50% | 8 | 3.78±0.26 | 40.7±3.6 | 13.0±1.2 | 31.8±1.9 | 9±0 | 17.9±0.9 |

The letters "L", "a", "b", respectively, denote the colour coordinates according to the international standard CIE Lab as previously defined with reference to Table 5.

Table 7 shows the sensory characteristics of the gluten-free beers obtained with the method of the invention. During the evaluation, the following parameters were considered with the related rating scale:
*Froth quantity:* absent, poor, medium, good, abundant;
*Froth persistence:* evanescent, not very persistent, medium persistent, persistent, extremely persistent;
*Olfactory intensity:* low, light, medium, high, very high;
*Olfactory finesse:* unpleasant, not very refined, ordinary, pleasant, elegant;
*Floral, fruity and spicy notes:* absent, barely perceptible, moderate, intense, strong *Overall quality: 1,2,3,4,5*

**Table 7**

| **Beer samples** | **Froth amount** | **Froth persistence** | **Olfactory intensity** | **Olfactory finesse** | **Defects** | **Overall quality** |
|---|---|---|---|---|---|---|
| Beers* | Medium | Medium persistent | Medium | Pleasant | Absent | 3 |
| Beers** | Abundant | Persistent-Extremely persistent | High | Pleasant | Absent | 4 |

Table 8 shows the sensory characteristics of bread produced by replacing 20% of commercial gluten-free flour with the gluten-free spent grain flours obtained with the method of the invention.

**Table 8**

| **Attributes evaluated** | **Rating scale of the attribute** | **Average score** |
|---|---|---|
| **Colour (shade and intensity) of the crust** | 0 Very light gold/9 dark brown | 4 |
| **Crust thickness** | 0 Very thin (sandwich loaf)/ 9 Extremely thick (loaf) | 6 |
| **Crumb colour** | 0 Whitish/9 Dark brown | 6 |
| **Crumb alveolation** | 0 Very small pores/9 Very large pores | 5 |
| **Development of the crumb** | 0 Compact texture/9 Soft and spongy texture | 5 |
| **Overall olfactory intensity (crust and crumb together)** | 0 Faint or absent / 9 Extremely intense | 8 |
| **Fragrance, typical smell of freshly baked bread (crust and crumb together)** | 0 Faint or absent / 9 Extremely intense | 7 |
| **Sweetness** | 0 Faint or absent / 9 Extremely intense | 8 |
| **Sapidity** | 0 Faint or absent / 9 Extremely intense | 5 |
| **Acidity** | 0 Faint or absent / 9 Extremely intense | 2 |
| **Bitterness** | 0 Faint or absent / 9 Extremely intense | 0 |
| **Hardness of the crust when chewed** | 0 Extremely soft/9 Extremely hard | 5 |
| **Crunchiness of the crust when chewed** | 0 Slightly or not crispy at all (Sandwich loaf)/9 Extremely crispy (crackers) | 5 |
| **Consistency of the crumb evaluated with the fingers and chewing** | 0 Very soft/9 Very hard | 3 |
| **Cohesiveness of the crumb evaluated by breaking it with the fingers** | 0 Not very cohesive, it crumbles/9 Very cohesive and compact | 6 |
| **Granularity/Fibrosity of** the **crumb perceived in the** mouth **during chewing** | 0 Not at all or slightly fibrous or grainy/9 Extremely fibrous or grainy | 1 |
| **Stickiness of the crumb perceived visually, to the** touch **and during chewing** | 0 Absent/9 Extremely sticky | 3 |
| **Overall quality** | 0 Poor/9 High | 8 |

Table 9 shows the sensory characteristics of biscuits produced by replacing 40% (biscuits 40%) and 50% (biscuits 50%) of commercial gluten-free flour with the gluten-free spent grain flours obtained with the method of the invention.

**Table 9**

| **Attributes evaluated** | **Rating scale of the attribute** | **Average score given to the biscuit samples** | |
|---|---|---|---|
| | | **Biscuits 40%** | **Biscuits 50%** |
| **Colour (shade and intensity)** | 0 Very light gold/9 Dark brown | 8 | 8 |
| **Overall olfactory intensity** | 0 Faint or absent / 9 Extremely intense | 7 | 8 |
| **Fragrance, typical smell of freshly baked biscuits** | 0 Faint or absent / 9 Extremely intense | 8 | 8 |
| **Roasted smell** | 0 Faint or absent / 9 Extremely intense | 2 | 2 |
| **Smell of Hazelnut/Dried fruit** | 0 Faint or absent / 9 Extremely intense | 4 | 3 |
| **Sweetness** | 0 Faint or absent / 9 Extremely intense | 7 | 7 |
| **Acidity** | 0 Faint or absent / 9 Extremely intense | 0 | 0 |
| **Bitterness** | 0 Faint or absent / 9 Extremely intense | 0 | 0 |
| **Astringency** | 0 Faint or absent / 9 Extremely intense | 0 | 0 |
| **Hardness when chewed** | 0 Extremely soft/9 Extremely hard | 6 | 5 |
| **Crunchiness when chewed** | 0 Slightly or not crispy at all (sandwich loaf)/9 Extremely crispy (crackers) | 4 | 7 |
| **Granularity/Fibrosity perceived in the mouth during chewing** | 0 Not at all or slightly fibrous or grainy/9 Extremely fibrous or grainy | 2 | 2 |
| **Friability perceived to the touch in the mouth during chewing (understood as the propensity to break into very small pieces)** | 0 Not at all or slightly friable/9 Extremely friable | 8 | 8 |
| **Overall quality** | 0 Poor/9 High | 8 | 9 |

## Claims

1. A method of producing gluten-free beer, wherein the method employs a mixture of a plurality of gluten-containing cereal grains as the starting material and comprises the steps of:
(i) contacting the mixture of a plurality of gluten-containing cereal grains with water at a temperature comprised between 35°C and 45°C, the grains being optionally in ground form;
(ii) heating the aqueous mixture of step (i) at a rate of about 1°C per minute until a temperature of 52°C is reached and keeping the aqueous mixture at said temperature for between 10 and 30 minutes;
(iii) further heating the aqueous mixture of step (ii) to a temperature comprised between 60°C and 75°C and keeping the aqueous mixture at said temperature for between 20 and 75 minutes, thereby obtaining a wort;
(iv) filtering the wort of step (iii) to separate the liquid fraction from the spent grains, thereby obtaining a clear wort;
(v) boiling the clear wort of step (iv) with hops at a temperature of 100°C for between 50 and 100 minutes, thereby obtaining a hop-treated wort;
(vi) fermenting the hop-treated wort of step (v) with one or more yeasts belonging to the *Saccharomyces* genus at a temperature comprised between 20°C and 25°C, to obtain a gluten-free beer,
**characterized in that** the mixture of a plurality of gluten-containing cereal grains employed as the starting material comprises barley malt in an amount of between 60% and 65% by weight and one or more unmalted cereals in a total amount of between 35% and 40% by weight.

2. A method of producing gluten-free spent grains, wherein the method employs a mixture of a plurality of gluten-containing cereal grains as the starting material and comprises the steps of:
(i) contacting the mixture of a plurality of gluten-containing cereal grains with water at a temperature comprised between 35°C and 45°C, the grains being optionally in ground form;
(ii) heating the aqueous mixture of step (i) at a rate of about 1°C per minute until a temperature of 52°C is reached and keeping the aqueous mixture at said temperature for between 10 and 30 minutes;
(iii) further heating the aqueous mixture of step (ii) to a temperature comprised between 60°C and 75°C and keeping the aqueous mixture at said temperature for between 20 and 75 minutes, thereby obtaining a wort;
(iv) filtering the wort of step (iii) to separate the spent grains from the liquid fraction, thereby obtaining gluten-free spent grains,
**characterised in that** the mixture of a plurality of gluten-containing cereal grains employed as the starting material comprises barley malt in an amount of between 60% and 65% by weight and one or more unmalted cereals in a total amount of between 35% and 40% by weight.

3. The method according to claim 1 or 2, wherein after step (iii) of heating to a temperature comprised between 60°C and 75°C for between 20 and 75 minutes, the wort is further heated to a temperature comprised between 75°C and 80°C and kept at said temperature for between 10 and 15 minutes.

4. The method according to any of claims 1 to 3, wherein step (iii) comprises:
(a) a first step of heating the aqueous mixture to a temperature comprised between 60°C and 65°C and keeping the aqueous mixture at said temperature for between 30 and 45 minutes, and
(b) a second step of further heating the aqueous mixture of step (a) to a temperature comprised between 70°C and 75°C and keeping the aqueous mixture at said temperature for between 20 and 45 minutes.

5. The method according to any of claims 1 to 4, wherein the one or more unmalted cereals are selected from the group consisting of soft wheat, durum wheat, spelt, and any combination thereof.

6. The method of producing gluten-free beer according to any of claims 1, 3 to 5, wherein the one or more yeasts belonging to the *Saccharomyces* genus are selected from *Saccharomyces cerevisiae* and *Saccharomyces carlsbergensis.*

7. The method of producing gluten-free beer according to any of claims 1, 3 to 6, wherein after fermentation step (vi), the gluten-free beer is subjected to a further fermentation step in bottle.

8. A method of producing gluten-free flour, comprising the steps of:
1) carrying out the method according to any of claims 2 to 5 to obtain gluten-free spent grains;
2) drying the gluten-free spent grains thus obtained, and
3) grinding the dried gluten-free spent grains.

9. The method according to claim 8, wherein the drying step is carried out at room temperature.

10. The method according to claim 8 or 9, wherein the grinding step is carried out by using a knife mill.

## Patentansprüche

1. Verfahren zur Herstellung von glutenfreiem Bier, wobei das Verfahren eine Mischung einer Vielzahl glutenhaltiger Getreidekörnern als Ausgangsmaterial verwendet und die folgenden Schritte umfasst:
(i) Bringen der Mischung einer Vielzahl von glutenhaltigen Getreidekörnern in Kontakt mit Wasser bei einer Temperatur zwischen 35°C und 45°C, wobei die Getreidekörner optional in gemahlener Form vorhanden sind;
(ii) Erhitzen der wässrigen Mischung aus Schritt (i) in einem Maß von etwa 1°C pro Minute, bis eine Temperatur von 52°C erreicht wird und Halten der wässrigen Mischung bei dieser Temperatur für eine Zeitspanne zwischen 10 und 30 Minuten;
(iii) Erhitzen weiter der wässrigen Mischung aus Schritt (ii) auf eine Temperatur zwischen 60°C und 75°C und Halten der wässrigen Mischung bei dieser Temperatur für eine Zeitspanne zwischen 20 und 75 Minuten, wodurch eine Würze erreicht wird;
(iv) Filtrieren der Würze aus Schritt (iii), um die flüssige Fraktion von den verbrauchten Körnern zu trennen, wodurch eine klare Würze erreicht wird;
(v) Kochen der klaren Würze aus Schritt (iv) mit Hopfen bei einer Temperatur von 100°C für eine Zeitspanne zwischen 50 und 100 Minuten, wodurch eine mit Hopfen behandelte Würze erreicht wird;
(vi) Gären der mit Hopfen behandelten Würze aus Schritt (v) mit einer oder mehreren Hefen, die zu der Gattung *Saccharomyces* gehören, bei einer Temperatur zwischen 20°C und 25°C, um glutenfreies Bier zu erreichen,
**dadurch gekennzeichnet, dass** die Mischung einer Vielzahl von glutenhaltigen Getreidekörnern, die als Ausgangsmaterial verwendet wird, Gerstenmalz in einer Menge zwischen 60 % und 65 % Gewichtsprozent sowie eine oder mehrere unvermälzte Getreide in einer Gesamtmenge zwischen 35 % und 40 % Gewichtsprozent enthält.

2. Verfahren zur Herstellung von glutenfreien verbrauchten Körnern, wobei das Verfahren eine Mischung einer Vielzahl von glutenhaltigen Getreidekörnern als Ausgangsmaterial verwendet und die folgenden Schritte umfasst:
(i) Bringen der Mischung einer Vielzahl von glutenhaltigen Getreidekörnern in Kontakt mit Wasser bei einer Temperatur zwischen 35°C und 45°C, wobei die Getreidekörner optional in gemahlener Form vorhanden sind;
(ii) Erhitzen der wässrigen Mischung aus Schritt (i) in einem Maß von etwa 1°C pro Minute, bis eine Temperatur von 52°C erreicht wird, und Halten der wässrigen Mischung bei dieser Temperatur für eine Zeitspanne zwischen 10 und 30 Minuten;
(iii) Erhitzen weiter der wässrigen Mischung aus Schritt (ii) auf eine Temperatur zwischen 60°C und 75°C und Halten der wässrigen Mischung bei dieser Temperatur für eine Zeitspanne zwischen 20 und 75 Minuten, wodurch eine Würze erreicht wird;
(iv) Filtrieren der Würze aus Schritt (iii), um die verbrauchten Körner von der flüssigen Fraktion zu trennen, wodurch glutenfreie verbrauchte Körner erreicht werden,
**dadurch gekennzeichnet, dass** die Mischung einer Vielzahl von glutenhaltigen Getreidekörnern, die als Ausgangsmaterial verwendet wird, Gerstenmalz in einer Menge zwischen 60 % und 65 % Gewichtsprozent sowie eine oder mehrere unvermälzte Getreide in einer Gesamtmenge zwischen 35 % und 40 % Gewichtsprozent enthält.

3. Verfahren nach Anspruch 1 oder 2, wobei die Würze, nach dem Schritt (iii) des Erhitzens auf eine Temperatur zwischen 60°C und 75°C für eine Zeitspanne zwischen 20 und 75 Minuten, weiter auf eine Temperatur zwischen 75°C und 80°C erhitzt wird und bei dieser Temperatur für eine Zeitspanne zwischen 10 und 15 Minuten gehalten wird.

4. Verfahren nach einem der Ansprüche 1 bis 3, wobei Schritt (iii) umfasst:
(a) einen ersten Schritt des Erhitzens der wässrigen Mischung auf eine Temperatur zwischen 60°C und 65°C und des Haltens der wässrigen Mischung bei dieser Temperatur für eine Zeitspanne zwischen 30 und 45 Minuten, und
(b) einen zweiten Schritt des Erhitzens weiter der wässrigen Mischung aus Schritt (a) auf eine Temperatur zwischen 70°C und 75°C und des Haltens der wässrigen Mischung bei dieser Temperatur für eine Zeitspanne zwischen 20 und 45 Minuten.

5. Verfahren nach einem der Ansprüche 1 bis 4, wobei die eine oder mehrere unvermälzten Getreide aus der Gruppe bestehend aus Weichweizen, Hartweizen, Dinkel und jeder Kombination davon ausgewählt werden.

6. Verfahren zur Herstellung von glutenfreiem Bier nach einem der Ansprüche 1, 3 bis 5, wobei die eine oder mehrere Hefen, die zu der Gattung Saccharomyces gehören, aus Saccharomyces cerevisiae und Saccharomyces carlsbergensis ausgewählt werden.

7. Verfahren zur Herstellung von glutenfreiem Bier nach einem der Ansprüche 1, 3 bis 6, wobei das glutenfreie Bier nach dem Gärungsschritt (vi) einem weiteren Gärungsschritt in der Flasche unterzogen wird.

8. Verfahren zur Herstellung von glutenfreiem Mehl, umfassend die folgenden Schritte:
1) Durchführen des Verfahrens nach einem der Ansprüche 2 bis 5, um glutenfreie verbrauchte Körner zu erreichen;
2) Trocknen der so erreichten glutenfreien verbrauchten Körner;
3) Mahlen der getrockneten glutenfreien verbrauchten Körner.

9. Verfahren nach Anspruch 8, wobei der Trocknungsschritt bei Raumtemperatur durchgeführt wird.

10. Verfahren nach Anspruch 8 oder 9, wobei der Mahlschritt mit einer Messermühle durchgeführt wird.

## Revendications

1. Procédé de production de bière sans gluten, ledit procédé utilisant un mélange d'une pluralité de céréales contenant du gluten comme matière première et comprenant les étapes de:
(i) mise en contact du mélange d'une pluralité de céréales contenant du gluten avec de l'eau à une température comprise entre 35°C et 45°C, les céréales étant éventuellement sous forme moulue;
(ii) chauffage du mélange aqueux de l'étape (i) à un taux d'environ 1°C par minute jusqu'à atteindre une température de 52°C et maintien du mélange aqueux à ladite température pendant une durée comprise entre 10 et 30 minutes;
(iii) chauffage supplémentaire du mélange aqueux de l'étape (ii) à une température comprise entre 60°C et 75°C et maintien du mélange aqueux à ladite température pendant une durée comprise entre 20 et 75 minutes, obtenant ainsi un moût;
(iv) filtration du moût de l'étape (iii) afin de séparer la fraction liquide des drêches, obtenant ainsi un moût clair;
(v) ébullition du moût clair de l'étape (iv) avec du houblon à une température de 100°C pendant une durée comprise entre 50 et 100 minutes, obtenant ainsi un moût houblonné;
(vi) fermentation du moût houblonné de l'étape (v) avec une ou plusieurs levures appartenant au genre Saccharomyces à une température comprise entre 20°C et 25°C, afin d'obtenir une bière sans gluten,
**caractérisé en ce que** le mélange d'une pluralité de céréales contenant du gluten utilisé comme matière première comprend du malt d'orge en une quantité comprise entre 60 % et 65 % en poids et une ou plusieurs céréales non maltées en une quantité totale comprise entre 35 % et 40 % en poids.

2. Procédé de production de drêches sans gluten, ledit procédé utilisant **un** mélange d'une pluralité de céréales contenant du gluten comme matière première et comprenant les étapes de:
(i) mise en contact du mélange d'une pluralité de céréales contenant du gluten avec de l'eau à une température comprise entre 35°C et 45°C, les céréales étant éventuellement sous forme moulue;
(ii) chauffage du mélange aqueux de l'étape (i) à un taux d'environ 1°C par minute jusqu'à atteindre une température de 52°C et maintien du mélange aqueux à ladite température pendant une durée comprise entre 10 et 30 minutes;
(iii) chauffage supplémentaire du mélange aqueux de l'étape (ii) à une température comprise entre 60°C et 75°C et maintien du mélange aqueux à ladite température pendant une durée comprise entre 20 et 75 minutes, obtenant ainsi un moût;
(iv) filtration du moût de l'étape (iii) afin de séparer les drêches de la fraction liquide, obtenant ainsi des drêches sans gluten,
**caractérisé en ce que** le mélange d'une pluralité de céréales contenant du gluten utilisé comme matière première comprend du malt d'orge en une quantité comprise entre 60 % et 65 % en poids et une ou plusieurs céréales non maltées en une quantité totale comprise entre 35 % et 40 % en poids.

3. Procédé selon la revendication 1 ou 2, dans lequel après l'étape (iii) de chauffage à une température comprise entre 60°C et 75°C pendant une durée comprise entre 20 et 75 minutes, le moût est encore chauffé à une température comprise entre 75°C et 80°C et maintenu à ladite température pendant une durée comprise entre 10 et 15 minutes.

4. Procédé selon l'une quelconque des revendications 1 à 3, dans lequel l'étape (iii) comprend :
(a) une première étape de chauffage du mélange aqueux à une température comprise entre 60°C et 65°C et maintien du mélange aqueux à ladite température pendant une durée comprise entre 30 et 45 minutes, et
(b) une seconde étape de chauffage supplémentaire du mélange aqueux de l'étape (a) à une température comprise entre 70°C et 75°C et maintien du mélange aqueux à ladite température pendant une durée comprise entre 20 et 45 minutes.

5. Procédé selon l'une quelconque des revendications 1 à 4, dans lequel la ou les céréales non maltées sont choisies dans le groupe constitué de blé tendre, blé dur, épeautre, et toute combinaison de ceux-ci.

6. Procédé de production de bière sans gluten selon l'une quelconque des revendications 1, 3 à 5, dans lequel la ou les levures appartenant au genre Saccharomyces sont choisies parmi Saccharomyces cerevisiae et Saccharomyces carlsbergensis.

7. Procédé de production de bière sans gluten selon l'une quelconque des revendications 1, 3 à 6, dans lequel après l'étape de fermentation (vi), la bière sans gluten est soumise à une étape supplémentaire de fermentation en bouteille.

8. Procédé de production de farine sans gluten, comprenant les étapes suivantes:
1) mise en œuvre du procédé selon l'une quelconque des revendications 2 à 5 afin d'obtenir des drêches sans gluten;
2) séchage des drêches sans gluten ainsi obtenues;
3) broyage des drêches sans gluten séchées.

9. Procédé selon la revendication 8, dans lequel l'étape de séchage est réalisée à température ambiante.

10. Procédé selon la revendication 8 ou 9, dans lequel l'étape de broyage est réalisée à l'aide d'un broyeur à couteaux.
